## Europäisches Patentamt

## European Patent Office

## Office européen des brevets

(19)

(11) Veröffentlichungsnummer: **0 163 940**

**B1**

(12) # EUROPÄISCHE PATENTSCHRIFT

(45) Veröffentlichungstag der Patentschrift:
23.06.89

(51) Int. Cl.⁴: **B 60 K 28/16**

(21) Anmeldenummer: **85105302.5**

(22) Anmeldetag: **01.05.85**

(54) **Vortriebsregeleinrichtung.**

(30) Priorität: **09.05.84 DE 3417089**

(43) Veröffentlichungstag der Anmeldung:
**11.12.85 Patentblatt 85/50**

(45) Bekanntmachung des Hinweises auf die Patenterteilung:
**23.06.89 Patentblatt 89/34**

(84) Benannte Vertragsstaaten:
**DE FR GB**

(56) Entgegenhaltungen:
**EP-A-0 064 669**
**EP-A-0 106 360**
**DE-A-3 127 302**
**DE-A-3 205 556**
**DE-B-1 808 799**
**DE-B-2 139 230**
**FR-A-2 365 704**

(73) Patentinhaber: **ROBERT BOSCH GMBH, Postfach 50, D-7000 Stuttgart 1 (DE)**

(72) Erfinder: **Leiber, Heinz, Ing. (grad.), Theodor-Heuss- Strasse 34, D-7141 Oberriexingen (DE)**
Erfinder: **Korasiak, Wolfgang, Ing., Bromberger Strasse 20, D-7120 Bietigheim (DE)**
Erfinder: **Roller, Dieter, Ing. (grad.), Steinbeisstrasse 31, D-7143 Vaihingen/Enz (DE)**
Erfinder: **Sigl, Alfred, Dipl.- Ing., Waldeckstrasse 8, D-7126 Sersheim (DE)**
Erfinder: **Schnaibel, Eberhard, Dipl.- Ing., Hochstetter 1/5, D-7152 Hemmingen (DE)**
Erfinder: **Brugger, Franz, Ing. (grad.), Rossburgstrasse 15, D-7057 Winnenden (DE)**

(74) Vertreter: **Kammer, Arno, Dipl.- Ing., ROBERT BOSCH GmbH Zentralabteilung Patente Postfach 50, D-7000 Stuttgart 1 (DE)**

EP 0 163 940 B1

**Beschreibung**

Die Erfindung betrifft eine Vortriebsregeleinrichtung mit den Merkmalen des Oberbegriffs des Anspruchs 1.

Vortriebsregeleinrichtungen mit diesen Merkmalen sind z. B. aus der DE-A1-3 127 302 bekannt. Diese bekannten Vortriebsregeleinrichtungen werden meist zusammen mit einer zweiten Regelungsart verwendet, bei der bei Enstehen von Antriebsschlupf an einem angetriebenen Rad dieses Rad gebremst wird (sh. die gleiche OS).

Bei der EP-A3-0 106 360 wird dem Fahrer eines Fahrzeugs eine Möglichkeit in die Hand gegeben, durch die es ihm möglich ist, den Kennlinienverlauf zwischen der Drosselklappenöffnung in Abhängigkeit von der Gaspedalstellung auszuwählen.

Der Erfindung liegt die Aufgabe zugrunde die Motormomentenregelung zu optimieren.

Diese Aufgabe wird durch die im Anspruch 1 angegebenen Merkmale gelöst.

Die Erfindung geht von der Erkenntnis aus, daß bei starkem Gasgeben die Drosselklappe mit einer großen maximalen Steigung der Vorgabe des Gaspedals folgt und dabei in vielen Fällen zumindest in die Nähe der Endstellung (90°) gelangt, bevor Antriebsschlupf entsteht. Da aber bereits bei etwa der Hälfte dieses Winkels (also bei ca. 45°) schon 90 % des Motormoments abgegeben werden können, muß bei der anschliessenden Regelung die Drosselklappe um einen großen Winkel rückgestellt werden, bevor eine wesentliche Reduzierung des Motormoments erfolgt. Hierfür wird unnötig Zeit verbraucht. Um diese abzukürzen, ist es sinnvoll, nicht dauernd, sondern nur zu Beginn des starken Gasgebens eine große maximale Steigung zuzulassen. Diese Maßnahme bringt keine wesentliche Einbuße an Fahrzeugbeschleunigung auf hohem Reibwert, verbessert jedoch das Regelverhalten bei niedrigem Reibwert erheblich. Der nichtlineare Zusammenhang zwischen Motormoment uns Drosselklappe läßt sich im Verlauf der Regelung berücksichtigen.

Die oben dargestellten Grundgedanken kann man in verschiedener Weise ausführen. So kann man zwischen dem Gaspedal und der Drosselklappe entweder eine elektrische oder mechanische oder hydraulische Einrichtung einschalten, die die maximale Drosselklappenverstellgeschwindigkeit zeitweise reduziert bzw. begrenzt. Die Begrenzung kann ab einem vorgegebenen Winkelwert der Drosselklappenstellung, der durch das Erreichen eines bestimmten Anteils (z. B. 90 %) der Vollast bestimmt sein kann, einsetzen, jedoch auch wirksam werden, wenn die große Verstellgeschwindigkeit über eine vorgegebene Zeit andauert. Es ist aber auch möglich, die maximale Anstiegsgeschwindigkeit zu reduzieren, sobald an wenigstens einem angetriebenen Rad Antriebsschlupf auftritt. Hierdurch wird schon beim ersten Erkennen einer möglichen Antriebsschlupfregelung in der Motormomentenregelung einem zu schnellen Erhöhen des Motordrehmoments entgegengewirkt. Bei einer eventuellen Filterung des Regelsignals für das Einsetzen der Motorregelung liegt die Umschaltung auf die kleinere Steigung damit deutlich früher. Man kann verschiedenen Winkelbereichen des Drosselklappenwinkels z. B. mit dem Drosselklappenwinkel abnehmende maximale Anstiegsgeschwindigkeiten zuordnen.

Eine weitere Verbesserung der Antriebsmomentenregelung ist dadurch möglich, daß mit Regelbeginn ein vorgegebener Drosselklappenwinkel (von z. B. ca. 45°C) eingestellt wird, also von einem bereits erreichten größeren Winkel auf diesen Winkel zurückgestellt wird.

Weiterhin kann dieser vorgegebene Drosselklappenwinkel bei Regelbeginn als Funktion der Fahrzeuggeschwindigkeit $V_F$ der Regelabweichung RA, der momentanen Drosselklappenstellung, der Motordrehzahl $n_{(M)}$ und in Abhängigkeit, ob nur ein oder beide Räder Antriebsschlupf besitzen, berechnet werden. Dies führt zu einem schnelleren Erreichen des optimalen Wertes. Auch ist es möglich, während der Motormomentenregelung den Drosselklappenwinkel nach unten zu begrenzen, da ab einem bestimmten minimalen Drosselklappenwinkel kein Durchdrehen auftreten kann. Bei Fahrzeugen mit Schaltgetriebe erweist sich eine Drosselklappenbegrenzung auf einen minimalen Winkel als sinnvoll damit die Gefahr des Motorabwürgens beseitigt wird. Dieser minimale Winkel ist abhängig von der Fahrzeuggeschwindigkeit und Motordrehzahl und wird deshalb vorzugsweise mit diesen variiert. Eine weitere Verfeinerung ist gegeben, wenn die Ausgabewerte der Antriebsmomentenregelung in Abhängigkeit von der momentanen Drosselklappenstellung gewichtet werden (nichtlineare Motormomentenkennlinie). Diese Gewichtung wird vorzugsweise in der Elektronik verwirklicht, welche schon Motor und Getriebeparameter berücksichtigen muß (z. B. E-Gas). Der oben erwähnte Vorgabewert kann z. B. wie folgt ermittelt werden:

Vorgabewert =
$$\text{Min}\left\{(DKI), \left(25° + \tfrac{0.5°}{km/h} \cdot V_F - \tfrac{1°}{km/h} \cdot RA - \tfrac{0.1°}{1/Min} \cdot n_M\right)\right\}$$

Dies bedeutet, daß der Vorgabewert entweder der augenblickliche Wert DKI bleibt, wenn dieser kleiner ist, oder aber entsprechend dem Klammerausdruck ermittelt und eingestellt wird. Dieser Vorgabewert wird halbiert, wenn an beiden Rädern Antriebsschlupf vorhanden ist.

Zur Linearisierung kann man, wenn von der Logik ein die Änderung angebender Wert abgegeben wird, noch Gewichtungsfaktoren für diese Änderungswerte einführen z. B. wie folgt:

Bei einer Drosselklappenstellung DKI < 20° Faktor 0,5, bei einer Drosselklappenstellung DKI zwischen 20° und 60° Faktor 1,0 und bei DKI > 60° Faktor 4,0.

Anhand der Zeichnung werden Ausführungsbeispiele der Erfindung erläutert.

Es zeigen

Fig. 1    ein Zeitdiagramm der Drosselklappenverstellung gemäß der Erfindung,
Fig. 2    ein erstes Ausführungsbeispiel der Erfindung,
Fig. 3    ein weiteres Ausführungsbeispiel der Erfindung.

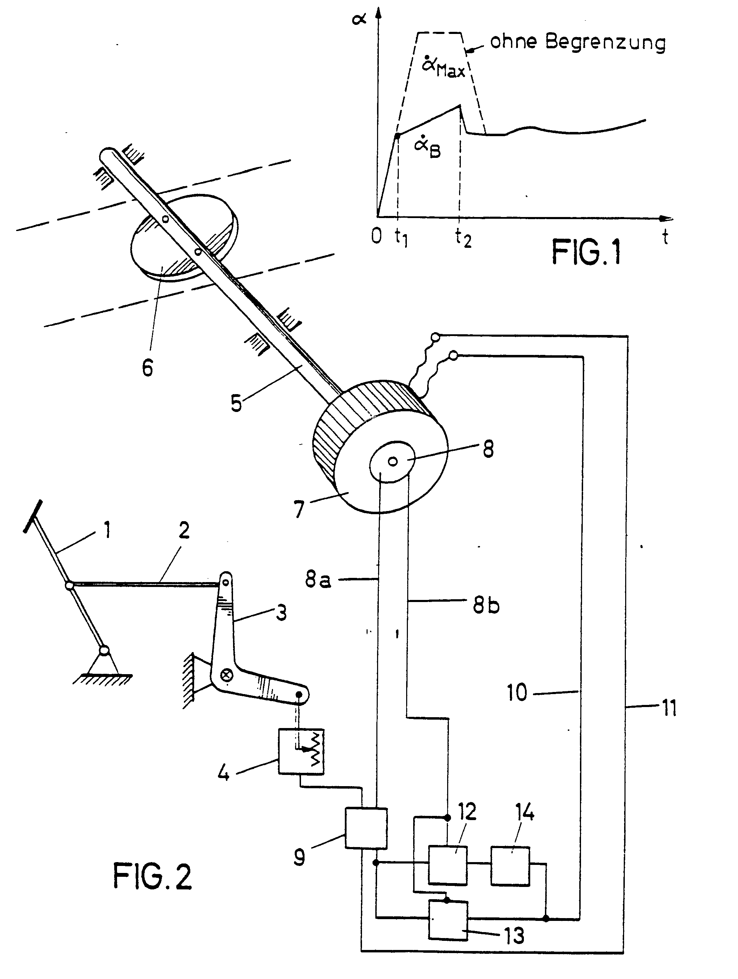

In Fig. 1 ist der Verlauf der Drosselklappenverstellung (Drosselklappenwinkel) über der Zeit bei starkem Gasgeben und einer erfindungsgemäß ausgelegten Vortriebsregeleinrichtung dargestellt. Im Zeitpunkt 0 wird begonnen stark Gas zu geben. Bis zum Zeitpunkt $t_1$ folgt die Drosselklappe mit der maximalen Steigung $\alpha_{max}$ dem Gaspedal. Ab $t_1$ setzt dann die Begrenzung der Anstiegsgeschwindigkeit auf den Wert $\alpha_B$ ein und wird bis $t_2$ beibehalten, ab welchem Zeitpunkt die Regelung des Motormoments beginnt. $\alpha_{max}$ kann eine für Antriebsschlupf optimierte Größe sein. Gestrichelt ist in Fig. 1 noch der Verlauf ohne Begrenzung eingezeichnet.

Im Ausführungsbeispiel der Fig. 2 ist mit 1 ein Gaspedal, mit 2 und 3 ein Gestänge bezeichnet, das einen Wandler 4 so verstellt, daß an dessen Ausgang ein von der Pedalstellung abhängiges Signal erzeugt wird. Mit 5 ist eine Welle einer Drosselklappe 6 bezeichnet, die von einem elektrischen Motor 7 verstellt wird. Der Motor 7 beinhaltet einen Winkelgeber 8 der ein von der Winkelstellung der Drosselklappe 6 abhängiges Signal über eine Leitung 8a abgibt. Die Ausgangssignale des Wandlers 4 und des Winkelgebers 8 werden in einem Vergleichsglied 9 verglichen. Das dabei erhaltene Differenzsignal steuert den Motor 7 über eine der Leitungen 10 oder 11 in die eine oder andere Richtung, bis die Drosselklappe 6 die vom Pedal 1 vorgegebene Stellung erreicht hat. Im Ausführungsbeispiel der Fig. 2 steuert der Winkelgeber 8 ab Erreichen eines vorgegebenen Winkels $\alpha_1$ über eine Leitung 8b zwei Tore 12 und 13, die parallel in die Leitung 10 eingeschaltet sind. Normalerweise ist Tor 13 durchlässig und läßt damit das Ausgangssignal des Vergleichsglieds 9 für die Verstellung des Drosselklappenwinkels $\alpha$ in Richtung größerer Winkel unbeeinflußt durch (schnelle Verstellung). Mit Erscheinen eines Signals auf der Leitung 8b wird das Tor 13 gesperrt und das Tor 12 geöffnet. Damit gelangt das Ausgangssignal des Vergleichsglieds 9 nun über ein das Eingangssignal verkleinerndes Anpassungsglied 14, das z. B. einen Spannungsteiler enthält, zum Motor 8. Damit dreht der Motor die Drosselklappe langsamer nach: die Nachstellgeschwindigkeit ist reduziert.

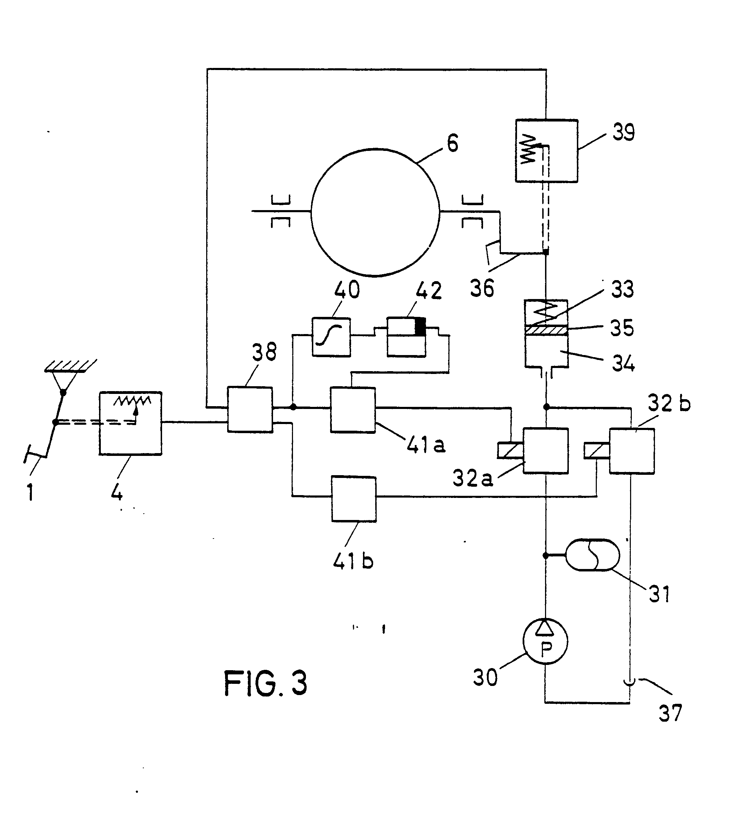

In Fig. 3 ist das Gaspedal wieder mit 1, der Wandler mit 4 und die Drosselklappe mit 6 bezeichnet. Hier erfolgt die Drosselklappenverstellung hydraulisch mittels eines Stellkolbens 35 in einem Zylinder 34 mit einer Gegenfeder 33, einer aus einer Pumpe 30 und einem Druckspeicher 31 bestehenden Druckversorgung und einem Einlaßventil 32a und einem Auslaßventil 32b. Die Verstellung des Kolbens 35 wird über ein Gestänge 36 auf die Drosselklappe 6 übertragen. Die Stellung der Drosselklappe 6 wird von einem Winkelgeber 39 in ein entsprechendes Signal umgesetzt, das in einem Vergleicher 38 mit dem Signal des Wandlers 4 verglichen wird. Der Vergleicher 38 geht in Abhängigkeit von Vorzeichen der Differenz auf einer seiner Leitungen ein Signal ab, das proportional der Differenz ist und das in Impulsgeneratoren und Modulatoren 41a und b in Impulse umgesetzt wird, deren Impuls-Impulspauseverhältnis von der Größe der Differenz abhängt. Mit diesen Impulsen werden die Ventile 32a und b angesteuert. Hierdurch wird der Drosselklappenwinkel $\alpha$ vergrößert (Impulsgenerator 41a und Einlaßventil 32a) oder verkleinert (Impulsgeneratoren 41b und Auslaßventil 32b zum Reservoir 37).

Das eine Ausgangssignal des Vergleichers 38 wird auch einem Integrator 40 zugeführt, der mit einer vorgegebenen Geschwindigkeit entladen wird. Ist das (Differenz) Signal des Vergleichers 38 so groß, daß die Aufladung des Integrators 40 dessen Entladung übersteigt, so wird nach einer Zeit eine Schwelle überschritten. Das dann erzeugte Ausgangssignal setzt ein bistabiles Glied 42, das dann eine wesentliche Verkleinerung des Impuls-Impulspauseverhältnisses im Impulsgenerator/Modulator 41a bewirkt. Damit wird durch diese Einwirkung auf den Impulsgenerator/Modulator 41a die maximale Geschwindigkeit der Verstellung des Drosselklappenwinkels (im Sinne einer Vergrößerung) verkleinert.

**Patentansprüche**

1. Vortriebsregeleinrichtung für ein Kraftfahrzeug mit einer Drosselklappe (6), die von dem Regler der Vortriebsregeleinrichtung bei Durchdrehneigung von angetriebenen Rädern an beiden Fahrzeugseiten mittels einer Drosselklappennachstelleinrichtung 7; 30 - 37 im Sinne einer Erniedrigung der Kraftstoffzufuhr verstellt wird, dadurch gekennzeichnet, daß zwischen Gaspedal (1) und Drosselklappennachstelleinrichtung (7; 30 - 37) eine Einrichtung (12 - 14; 40 - 42) wirksam ist, die ausgehend von der Leerlaufstellung zuerst eine große maximale Verstellgeschwindigkeit der Drosselklappe (6) zuläßt und diese danach auf wenigstens einen vorgegebenen kleineren Wert reduziert.

2. Vortriebsregeleinrichtung nach Anspruch 1, dadurch gekennzeichnet, daß die max. Verstellgeschwindigkeit ab einem vorgegebenen Drosselklappenwinkel ($\alpha$) reduziert wird.

3. Vortriebsregeleinrichtung nach Anspruch 1, dadurch gekennzeichnet, daß die maximale Verstellgeschwindigkeit bei Andauern einer großen Stellgeschwindigkeit über eine vorgegebene Zeit hinaus reduziert wird.

4. Vortriebsregeleinrichtung nach Anspruch 1, dadurch gekennzeichnet, daß die maximale Verstellgeschwindigkeit ab Auftreten eines Antriebsschlupfs an wenigstens einem angetriebenen Fahrzeugrad reduziert wird.

5. Vortriebsregeleinrichtung nach Anspruch 1, dadurch gekennzeichnet, daß die maximale Verstellgeschwindigkeit in unterschiedlichen Bereichen des Verstellwinkels (α) unterschiedlich vorgegeben ist.

6. Vortriebsregeleinrichtung nach Anspruch 2, dadurch gekennzeichnet, daß der vorgegebene Drosselklappenwinkel (α) vom Erreichen eines vorgegebenen, von der Motordrehzahl abhängigen Anteils der Vollast (z. B. 90 %) bestimmt ist.

7. Vortriebsregeleinrichtung nach einem der Ansprüche 1 - 6, dadurch gekennzeichnet, daß bei Beginn der Antriebsschlupfregelung der Drosselklappenwinkel auf einen vorgegebenen Winkel rückgestellt wird.

8. Vortriebsregelung nach Anspruch 7, dadurch gekennzeichnet, daß der vorgegebene Wert von der Motordrehzahl ($n_M$), der Fahrzeuggeschwindigkeit $V_F$, der Regelabweichung (RA) und/oder der momentanen Drosselklappenstellung abhängig ist.

9. Vortriebsregeleinrichtung nach einem der Ansprüche 1 bis 8, dadurch gekennzeichnet, daß während der Regelung des Motormoments der Drosselklappenwinkel nach unten begrenzt ist.

10. Vortriebsregeleinrichtung nach Anspruch 9, dadurch gekennzeichnet, daß diese untere Grenze von der Fahrzeuggeschwindigkeit abhängig gemacht ist.

## Claims

1. Propulsion control system for a motor vehicle having a throttle flap (6) which is adjusted by the controller of the propulsion control system by means of a throttle flap adjusting device (7; 30 - 37) in the sense of a reduction in the fuel supply in the case of a tendency for driven wheels on both sides of the vehicle to slip, characterized in that a device (12 - 14; 40 - 42) which is operative between the accelerator pedal (1) and the throttle flap adjusting device (7; 30 - 37) at first permits a high maximum adjustment speed of the throttle flap (6) starting from the no-load position and then reduces the latter at least to a predetermined lower value.

2. Propulsion control system according to Claim 1, characterized in that the maximum adjustment speed is reduced from a predetermined throttle flap angle (α).

3. Propulsion control system according to Claim 1, characterized in that the maximum adjustment speed is reduced when a high adjustment speed persists for a predetermined period.

4. Propulsion control system according to Claim 1, characterized in that the maximum adjustment speed is reduced from the occurrence of a drive slip at at least one driven vehicle wheel.

5. Propulsion control system according to Claim 1, characterized in that the maximum adjustment speed is predetermined differently in different ranges of the adjustment angle (α).

6. Propulsion control system according to Claim 2, caracterized in that the predetermined throttle flap angle (α) is determined by the reaching of a predetermined fraction (90 % for example) of the full load which is a function of the engine speed.

7. Propulsion control system according to one of Claims 1 - 6, characterized in that the throttle flap angle is returned to a predetermined angle at the start of the drive slip control.

8. Propulsion control system according to Claim 7, characterized in that the predetermined value is a function of the engine speed ($n_M$), of the vehicle speed ($V_F$), of the control deviation (RA) and/or of the instantaneous throttle flap position.

9. Propulsion control system according to one of Claims 1 to 8, characterized in that the throttle flap angle is limited downwards during the control of the engine torque.

10. Propulsion control system according to Claim 9, characterized in that this lower limit is made a function of the vehicle speed.

## Revendications

1. Dispositif régulateur de propulsion pour un véhicule automobile avec un papillon des gaz (6), qui est réglé par le régulateur du dispositif régulateur de propulsion lors de l'inclinaison en patinage des roues motrices des deux côtés du véhicule, au moyen d'un dispositif (7, 30 - 37) de réajustement du papillon des gaz dans le sens d'une diminution de consommation de carburant, caractérisé en ce que, entre la pédale d'accélérateur (1) et le dispositif (7, 30 - 37) de réajustement du papillon des gaz, un dispositif (12 - 14, 40 - 42) est opérationnel qui, à partir du réglage du ralenti, admet tout d'abord une grande vitesse maximale de réglage du papillon des gaz (6) et ensuite réduit celle-ci au moins à une plus petite valeur choisie à l'avance.

2. Dispositif régulateur de propulsion selon la revendication 1, caractérisé en ce que la vitesse maximale de réglage est réduite à partir d'un certain angle (α) choisi à l'avance du papillon des gaz.

3. Dispositif régulateur de propulsion selon la revendication 1, caractérisé en ce que la vitesse maximale de réglage, lors de la continuation d'une grande vitesse de réglage, est ensuite réduite au-delà d'un laps de temps choisi à l'avance.

4. Dispositif régulateur de propulsion selon la revendication 1, caractérisé en ce que la vitesse maximale de réglage est réduite à partir de l'apparition d'un glissement d'entraînement au moins à une roue motrice du véhicule.

5. Dispositif régulateur de propulsion selon la revendication 1, caractérisé en ce que la vitesse maximale de réglage est choisie à l'avance, de façon différente dans différentes zones de l'angle ($\alpha$) de réglage.

6. Dispositif régulateur de propulsion selon la revendication 2, caractérisé en ce que l'angle ($\alpha$) choisi à l'avance du papillon des gaz est déterminé à partir de l'obtention d'une proportion choisie à l'avance de la pleine charge (par exemple 90 %) et dépendant de la vitesse de rotation du moteur.

7. Dispositif régulateur de propulsion selon l'une quelconque des revendications 1 à 6, caractérisé en ce que, lors du début du réglage de glissement d'entraînement, l'angle du papillon des gaz est ramené à un angle choisi à l'avance.

8. Dispositif régulateur de propulsion selon la revendication 7, caractérisé en ce que la valeur choisie à l'avance de l'angle du papillon des gaz dépend de la vitesse de rotation ($n_M$) du moteur, de la vitesse ($V_F$) du véhicule automobile, de la variation (RA) de réglage, et/ou de la position instantanée du papillon des gaz.

9. Dispositif régulateur de propulsion selon l'une quelconque des revendications 1 à 8, caractérisé en ce que, pendant le réglage du couple moteur, l'angle du papillon des gaz est limité vers le bas.

10. Dispositif régulateur de propulsion selon la revendication 9, caractérisé en ce que cette limite inférieure a été rendue dépendante de la vitesse du véhicule.

FIG.1

FIG.2

FIG. 3